# EUROPÄISCHE PATENTSCHRIFT

(11) **EP 0 637 380 B1**
(45) Veröffentlichungstag und Bekanntmachung des Hinweises auf die Patenterteilung: **01.10.1997**
(21) Anmeldenummer: 93909079.1
(22) Anmeldetag: 20.04.1993
(51) Int. Cl.: G01N 27/30

(54) **VERFAHREN ZUR HERSTELLUNG VON ELEKTROCHEMISCHEN FÜHLERN, SOWIE ELEKTROCHEMISCHER FÜHLER**
PROCESS FOR PRODUCING ELECTROCHEMICAL SENSORS AND ELECTROCHEMICAL SENSORS
PROCEDE DE FABRICATION DE CAPTEURS ELECTROCHIMIQUES ET SONDES ELECTROCHIMIQUES

(30) Priorität: 22.04.1992 HU 130492
(43) Veröffentlichungstag der Anmeldung: 08.02.1995
(73) Patentinhaber: LESZLAUER, Zoltán, H-9022 Györ (HU)
(72) Erfinder: LESZLAUER, Zoltán, H-9022 Györ (HU)
(74) Vertreter: Viering, Jentschura & Partner
(86) Internationale Anmeldenummer: HU9300023
(87) Internationale Veröffentlichungsnummer: WO9321519

(56) Entgegenhaltungen:
- EP-A- 0 400 813
- DD-A- 150 655
- US-A- 3 909 385

## Beschreibung

Die Erfindung betrifft ein Verfahren zur Herstellung von aus Metall gefertigten elektrochemischen Fühlern, sowie einen mittels des Verfahrens hergestellten elektrochemischen Fühler, bei dem an das das Material des Fühlers bildende Metall ein aus anderem Metall gefertigtes Kontaktelement angeschlossen ist. Die erfindungsgemäße Lösung ist in erster Linie bei elektrochemischen Fühlern verwendbar, die aus seltenem oder besonderem Metall gefertigt sind.

Bei elektrochemischen Messungen treten solche Aufgaben auf, die die Anwendung von aus "besonderem Metall" gefertigten Elektrodenmaterialien beanspruchen. Unter dem Begriff "besonderes Metall" werden schwer behandelbare zum Beispiel über eine instabile Oberfläche verfügende schwer oder überhaupt nicht lötbare oder schweißbare Metalle verstanden, zum Beispiel Magnesium oder Seltenerdmetalle, dazu können jedoch auch die besonders teueren oder eine besondere Reinheit aufweisenden Elektrodenmaterialien gezählt werden, wie zum Beispiel Gold, Platin oder Aluminium mit einer Reinheit von 99,99 %.

Soll die Elektrode aus einem zur erstgenannten Gruppe gehörenden Metall gefertigt werden, so ist wegen der instabilen (stark oxidierenden) Oberfläche des Elektrodenmaterials der Anschluß der Kontaktelemente besonders schwer zu realisieren. Die mechanische Stabilität einiger Seltenerdmetalle ist auch schlecht, darum stellt die Ausbildung der Elektrode auch eine schwere technische Aufgabe dar.

Im Falle der zur zweiten Gruppe gehörenden teuren bzw. eine hohe Reinheit aufweisenden Materialien ist einerseits die Menge des Elektrodenmaterials zu minimalisieren, andererseits ist zu vermeiden, daß bei dem Anschluß des Kontaktelementes in das Metall, das eine hohe Reinheit aufweist, Verschmutzungen gelangen.

Die Aufgabe der Erfindung besteht in der Schaffung einer solchen Lösung, mittels welcher aus den hier erwähnten besonderen Metallen wirtschaftlich eine elektrochemische Elektrode guter Qualität hergestellt werden kann.

Die Erfindung beruht auf der Erkenntnis, daß das größte Problem der Verwendung der besonderen Materialien, die Korrosion, bzw. die Verringerung der Reinheit dadurch vermieden werden kann, daß das Elektrodenmaterial in Pulverform in das Innere eines Schutzrohres gebracht wird, dann hier geschmolzen wird und zwischen dem geschmolzenen Elektrodenpulver und der Innenwand des Metallrohres eine genügend stabil leitende Verbindung verwirklicht wird. Während der Erwärmung ist für den vollständigen Ausschluß der Korrosionswirkungen zu sorgen. Diese Bedingung kann durch den hermetischen Abschluß des Rohres, bzw. im Falle eines offenen Rohres im Vakuum oder durch Erzeugung einer Schutzgasatmosphäre geschaffen werden.

Gemäß Obenerwähnter kann als Elektrodenmetall Magnesium, ein Seltenerdmetall, Gold, Platin oder Aluminium mit besonders hoher Reinheit, bzw. deren Legierungen oder eine Mischung der pulverförmigen Materialien verwendet werden.

Dadurch, daß das empfindliche Elektrodenmaterial in Pulverform dosiert wird, kann eine Reihe von Vorteilen erzielt werden. Die besonderen Elektrodenmaterialien sind in Pulverform viel besser erschließbar und beschaffbar, der Materialverlust ist praktisch Null. Während des im abgeschlossenen Rohr oder unter Vakuum erfolgenden Schmelzens wird die Verunreinigung, Oxidation der Oberfläche verhindert, zwischen dem geschmolzenen Material und dem äußeren Rohr entsteht eine entsprechend gut elektronenleitende Verbindung. Das Rohr sorgt gleichzeitig für eine geeignete Festigkeit und sichert für das empfindliche Elektrodenmaterial einen ständigen Schutz.

Bei einer bevorzugten Durchführungsweise des Verfahrens werden die Rohre in Bohrungen eines mit einer Vielzahl von senkrechten positionierenden Bohrungen versehenen Positionierungswerkzeuges gelegt, wobei das obere Ende der Rohre unter die obere Ebene des Positionierungswerkzeuges gelangt, und die Dosierung des Pulvers, desweiteren die Wärmebehandlung an den in dem Positionierungswerkzeug befestigten Rohren durchgeführt werden.

Aus Gesichtspunkten der Wirtschaftlichkeit ist es vorteilhaft, wenn von einem Rohr ausgegangen wird, dessen Länge ein Mehrfaches der erforderlichen Elektrodenlänge beträgt, und dieses nach der Kühlung der geforderten Elektrodenlänge entsprechend zerteilt wird.

Gemäß einer anderen Lösung wird das eine Ende des Rohres vor dem Einfüllen des pulverförmigen Elektrodenmaterials abgeschlossen, während das andere Ende des Rohres danach abgeschlossen wird, zum Beispiel durch Stauchen und nachfolgendes Schweis-sen und danach die Wärmebehandlung vorgenommen wird. In dem geschlossenen Innenraum des Rohres kann keine Korrosion auftreten.

Der erfindungsgemäß ausgebildete elektrochemische Fühler hat eine aus Magnesium, einem Seltenerdmetall, Gold, Platin oder Aluminium mit besonders hoher Reinheit, bzw. einer Legierung dieser Metalle bestehende Fühlerfläche und ein damit metallisch verbundenes Kontaktelement, wobei das Elektrodenmaterial in dem Innern eines Rohres angeordnet ist, das aus einem Metall gefertigt ist, dessen Schmelzpunkt höher als der des Elektrodenmaterials ist.

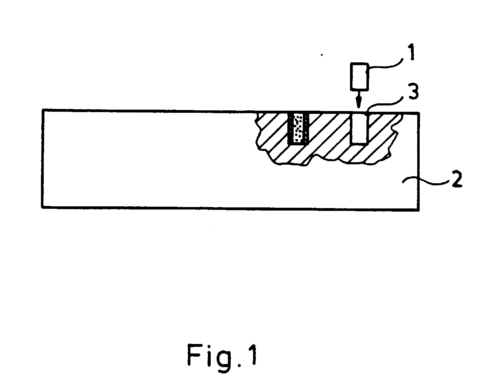

Nachstehend wird die erfindungsgemäße Lösung anhand von Beispielen unter Bezugnahme auf die Zeichnung näher erläutert. In der Zeichnung zeigt die
- Figur 1: einen Schnitt eines Details des Positionierungswerkzeuges.

Im Falle der beispielsweisen Ausführungsform war die Aufgabe die Herstellung des elektrischen Kontaktelementes einer zum Detektieren von elektrochemischen Vorgängen verwendbaren Magnesiumelektrode mit kleiner Oberfläche. Zuerst wird ein eine entsprechende Festigkeit und stabile Oberfläche aufweisendes Rohr 1 aus einem lötbaren und/oder schweißbaren Metall hergestellt, wobei dieses Rohr 1 einen der Abmessung der herzustellenden Magnesiumelektrode entsprechenden inneren Durchmesser aufweist. Die Wandstärke des Rohres 1 ist nicht kritisch, es ist jedoch zweckmäßig, eine die erforderliche Festigkeit sichernde minimale Wandstärke zu wählen. In dem Ausführungsbeispiel ist das Rohr 1 aus einen Durchmesser von 1 mm aufweisendem rostfreiem Stahl gefertigt, sein innerer Durchmesser beträgt 0,6 mm, seine Länge 5 mm. Es sei erwähnt, daß das Rohr 1 nur aus einem solchen Material gefertigt werden kann, dessen Schmelzpunkt über dem Schmelzpunkt von Magnesium liegt.

Zur Ausbildung der Elektrode wird ein Positionierungswerkzeug 2 gefertigt, an dem Positionierungswerkzeug 2 wird in regelmäßiger Anordnung eine große Anzahl von Bohrungen 3 mit senkrechter Achse ausgebildet, deren Durchmesser sich locker an das Außenmaß der Rohre 1 anpaßt und deren Tiefe etwas größer als die Länge der Rohre 1 ist. In jeder der Bohrungen 3 wird je ein Rohr 1 angeordnet. In die so gelegte Rohre 1 wird über ihre obere Öffnung Magnesiumpulver dosiert, das den Innenraum der Rohre 1 praktisch vollkommen ausfüllt.

Dann wird das Positionierungswerkzeug 2 in einen Vakuumofen gebracht. Nach dem Absaugen der Luft wird das Positionierungswerkzeug 2 über die Schmelztemperatur von Magnesium, die 651 °C beträgt, erwärmt, worauf das Magnesiumpulver schmilzt und den Innenraum der Bohrungen 3 bis zu einer der wirklichen Materialmenge entsprechenden Höhe gleichmäßig ausfüllt. Zwischen dem geschmolzenen Magnesium und der Rohrinnenwand entsteht ein stabiler Kontakt. Anstelle von Vakuum kann natürlich die Wärmebehandlung auch in einer Schutzgasatmosphäre durchgeführt werden.

Nach dem Aufheben des Vakuums können bereits den Bohrungen 3 des Positionierungswerkzeuges 2 die funktionsbereiten Magnesiumelektrodenkonstruktionen entnommen werden. Für die meisten Anwendungen ist es zweckmäßig, eine nadelförmige Elektrode anzuwenden. Das kann man im Falle der erfindungsgemäßen Lösung durch schräges Abschleifen des Endes des mit Magnesium gefüllten Rohres 1 erreichen.

Der Anschluß an die aus dem mit Magnesium gefüllten Rohr 1 gefertigte Elektrode kann auf beliebige bekannte Weise durch Anschluß an die freie Mantelfläche oder an das hintere Ende des Rohres 1 gelöst werden. So besteht zum Beispiel die Möglichkeit zum Anlöten eines Ausführungsdrahtes, ein stabiler Anschluß kann auch durch Anschweißen eines Anschlußelementes aus entsprechendem Material an das Rohrmaterial realisiert werden. Bei einer alternativen Ausführungsform kann an den Mantel des Rohres 1 das Ende eines anderen Halterohres mittels Pressverbindung angeschlossen werden, und dieses andere Rohr sichert auch die erforderliche Konstruktionslänge und Stabilität der Konstruktion.

Bei einer Ausführungsvariante des erfindungsgemäßen Verfahrens wird das Rohr 1 mit einer einem Vielfachen der erforderlichen Elektrodenlänge entsprechenden Länge ausgebildet und sein eines Ende wird vor dem Einfüllen des Metallpulvers abgeschlossen. Das Abschließen kann zum Beispiel durch einfaches Abklemmen gelöst werden. Nach dem Einfüllen des Metallpulvers wird auch das andere Ende des Rohres abgeschlossen, und beide Enden werden im auf luftdichte und wärmefeste Weise abgeschlossenen Zustand befestigt. Dieser Vorgang kann zum Beispiel durch Punktschweißen der abgeklemmten Rohrenden erfolgen. Das Abschließen des Rohrendes und das Einfüllen können in Schutzgasatmosphäre oder unter Vakuum erfolgen, unter normaler Luft durchgeführte Operationen können auch eine entsprechende Reinheit sichern. Das Maß des Korrosionsschutzes wird durch die Anforderung an die Reinheit gegenüber der Elektrode bestimmt.

Zur Zeit der Erwärmung über die Schmelztemperatur des Elektrodenpulvers sind die beiden Enden des Rohres bereits im abgeschlossenen Zustand, deshalb kann kein korrosionverursachendes Material in den Innenraum gelangen.

Das fertige Rohr, dessen Innenraum mit dem während der Wärmebehandlung in geschmolzenen Zustand gebrachten Elektrodenmaterial ausgefüllt ist, wird in Abschnitte, die eine dem Elektrodenmaß entsprechende Länge aufweisen, zerteilt (zerstückelt) und aus diesen werden auf die bei dem vorhergehenden Ausführungsbeispiel beschriebene Weise Elektroden gefertigt.

## Patentansprüche

1. Verfahren zur Herstellung von aus Metall gefertigten elektrochemischen Fühlern, wobei an das das Material des Fühlers bildende Metall ein aus einem anderen Metall mit einem gegenüber dem Metall des Fühlers höheren Schmelzpunkt gefertigtes Kontaktelement angeschlossen wird, **dadurch gekennzeichnet**, daß aus dem das Kontaktelement bildenden Metall ein Rohr (1) gefertigt wird, daß aus dem die Elektrode bildenden Metall hergestelltes Pulver in das Innere des Rohres (1) gefüllt, in dieser Lage in einem Korrosion ausschließenden Raum über den Schmelzpunkt des die Elektrode bildenden Metalls erwärmt und anschließend bis zum Festwerden der Schmelze abgekühlt wird.

2. Verfahren nach Anspruch 1, **dadurch gekennzeichnet,** daß als Elektrodenmetall Magnesium, ein Seltenerdmetall, Gold, Platin oder Aluminium mit besonders hoher Reinheit bzw. Legierungen dieser Metalle verwendet werden.

3. Verfahren nach Anspruch 1 oder 2, **dadurch gekennzeichnet,** daß die beiden Enden des Rohres (1) vor dem Erwärmen abgeschlossen werden.

4. Verfahren nach Anspruch 1 oder 2, **dadurch gekennzeichnet**, daß das Rohr (1) im vorgegebener, vorzugsweise senkrechter Position befestigt wird, sein Inneres in dieser Position mit dem aus dem die Elektrode bildenden Metall hergestellten Pulver gefüllt wird, die Erwärmung in einem geschlossenen Ofen unter Vakuum oder in einer Schutzgasatmosphäre durchgeführt wird und diese Umgebung mindestens bis zum Festwerden der Schmelze aufrechterhalten wird.

5. Verfahren nach Anspruch 4, **dadurch gekennzeichnet,** daß die Rohre (1) in Bohrungen (3) eines mit einer Vielzahl von senkrechten positionierenden Bohrungen (3) versehenen Positionierungswerkzeuges (2) angeordnet werden, wobei das obere Ende der Rohre (1) unter die obere Ebene des Positionierungswerkzeuges (2) gebracht wird und das Dosieren des Pulvers sowie die Wärmebehandlung an den in dem Positionierungswerkzeug (2) befestigten Rohren (1) durchgeführt wird.

6. Verfahren nach einem der Ansprüche 1 bis 4, **dadurch gekennzeichnet,** daß von einem Rohr (1) ausgegangen wird, dessen Länge ein Vielfaches der erforderlichen Elektrodenlänge beträgt und dieses Rohr (1) nach dem Abkühlungsvorgang der gewünschten Elektrodenlänge entsprechend zerteilt wird.

7. Elektrochemischer Fühler, der eine aus Magnesium, einem Seltenerdmetall, Gold, Platin oder Aluminium mit besonders hoher Reinheit, bzw. einer Legierung dieser Metalle bestehende Fühlerfläche und ein damit metallisch verbundenes Kontaktelement aufweist, **dadurch gekennzeichnet**, daß das Elektrodenmaterial im Innern eines Rohres (1) angeordnet ist, das aus einem Metall mit gegenüber dem Elektrodenmaterial höherem Schmelzpunkt besteht.

8. Elektrochemischer Fühler nach Anspruch 7, **dadurch gekennzeichnet,** daß das Kontaktelement an die Wand des Rohres (1) angeschlossen ist.

## Claims

1. A method for producing electrochemical sensors made of metal, wherein a contact element is bonded to the metal constituting the sensor material, the contact element being made of a different metal the melting point of which is above that of the sensor metal, characterised in that a tube (1) is formed from the metal constituting the contact element, that powder manufactured from the metal forming the electrode is filled into the interior of the tube (1), that in this position within a space excluding corrosion the powder is heated to a temperature above the melting point of the metal forming the electrode, and subsequently cooled down until the molten powder solidifies.

2. The method of claim 1, characterised in that magnesium, a rare-earth element, gold, platinum, or aluminium of particularly high purity, or alloys of these metals are used as the electrode metal.

3. The method of claim 1 or 2, characterised in that the two ends of the tube (1) are closed prior to the heating process.

4. The method of claim 1 or 2, characterised in that the tube (1) is mounted in a predetermined, preferably vertical position, that in this position the interior of the tube (1) is filled with the powder manufactured from the metal forming the electrode, that the heating process is performed in a closed furnace in vacuo or in a protective atmosphere, this environment being maintained at least until the molten powder solidifies.

5. The method of claim 4, characterised in that the tubes (1) are arranged in bores (3) of a positioning tool (2) provided with a multiplicity of vertical positioning bores (3), wherein the upper end of each tube (1) is placed below the upper plane of the positioning tool (2), and the powder is apportioned and the heating process carried out while the tubes (1) are held in the positioning tool (2).

6. The method of any one of claims 1 to 4, characterised in that the method sets out from a tube (1) the length of which is a multiple of the required electrode length, and this tube (1) is divided according to the desired electrode length after the cooling process.

7. An electrochemical sensor comprising a sensor surface consisting of magnesium, a rare-earth element, gold, platinum, or aluminium of particularly high purity, or an alloy of these metals, and a contact element bonded to said sensor surface through a metallic connection, characterised in that the electrode material is disposed inside a tube (1) consisting of a metal the melting point of which is above that of the electrode material.

8. The electrochemical sensor of claim 7, characterised in that the contact element is bonded to the wall of the tube (1).

## Revendications

1. Procédé de fabrication de capteurs électrochimiques en métal, dans lequel est relié au métal formant le capteur un élément de contact en un autre métal présentant un point de fusion plus élevé par rapport au métal du capteur, **caractérisé en ce qu'**un tube (1) est fabriqué dans le métal formant l'élément de contact, en ce qu'on remplit l'intérieur du tube (1) d'une poudre du métal formant l'électrode, en ce que cette poudre est chauffée dans cette position dans un volume empêchant la corrosion au-dessus du point de fusion du métal formant l'électrode et est ensuite refroidie jusqu'à solidification, du bain de fusion.

2. Procédé selon la revendication 1, **caractérisé en ce qu'**on utilise comme métal pour l'électrode le magnésium, un métal des terres rares, l'or, le platine ou l'aluminium d'une pureté particulièrement élevée respectivement des alliages de ces métaux.

3. Procédé selon la revendication 1 ou 2, **caractérisé en ce que** les deux extrémités du tube (1) sont fermées avant le chauffage.

4. Procédé selon la revendication 1 ou 2, **caractérisé en ce que** le tube (1) est fixé dans une position prédéterminée, de préférence verticale, son intérieur est rempli dans cette position avec la poudre de métal formant l'électrode, le chauffage est effectué dans un four fermé sous vide ou dans une atmosphère gazeuse protectrice et cet environnement est maintenu au moins jusqu'à la solidification du bain de fusion.

5. Procédé selon la revendication 4, **caractérisé en ce que** les tubes (1) sont disposés dans des alésages (3) d'un outil de positionnement (2) pourvu d'une pluralité d'alésages de positionnement verticaux (3), l'extrémité supérieure des tubes (1) étant amenée sous le plan supérieur de l'outil de positionnement (2) et le dosage de la poudre ainsi que le traitement par la chaleur étant effectués sur les tubes (1) fixés dans l'outil de positionnement (2).

6. Procédé selon l'une quelconque des revendications 1 à 4, **caractérisé en ce qu'**on part d'un tube (1) dont la longueur est un multiple de la longueur requise pour les électrodes et ce tube (1) est fractionné après le processus de refroidissement en des longueurs correspondant à la longueur d'électrode souhaitée.

7. Capteur électrochimique présentant une surface de capteur en magnésium, en métal des terres rares, en or, en platine ou en aluminium présentant un degré de pureté particulièrement élevé, respectivement en un alliage de ces métaux et un élément de contact relié métalliquement à celui-ci, **caractérisé en ce que** le matériau formant l'électrode est disposé à l'intérieur d'un tube (1) qui est en un métal présentant un point de fusion plus élevé que celui du matériau de l'électrode.

8. Capteur électrochimique selon la revendication 7, **caractérisé en ce que** l'élément de contact est relié à la paroi du tube (1).
